# EUROPÄISCHE PATENTSCHRIFT

(11) **EP 4 074 162 B1**
(45) Veröffentlichungstag und Bekanntmachung des Hinweises auf die Patenterteilung: **31.01.2024**
(21) Anmeldenummer: 22167277.7
(22) Anmeldetag: 08.04.2022
(51) Int. Cl.: A01F 15/10, A01F 15/18

(54) **RUNDBALLENPRESSE MIT STARTERWALZE UND ELASTISCH AUSLENKBAREM AUSLENKELEMENT**
ROTARY BALER WITH STARTER ROLLER AND ELASTICALLY DEFLECTABLE DEFLECTION ELEMENT
PRESSE À BALLES RONDES POURVUE DE ROULEAU DE DÉMARRAGE ET D'ÉLÉMENT DE DÉVIATION POUVANT ÊTRE DÉVIÉ ÉLASTIQUEMENT

(30) Priorität: 16.04.2021 DE 102021109629
(43) Veröffentlichungstag der Anmeldung: 19.10.2022
(73) Patentinhaber: Maschinenfabrik Bernard Krone GmbH & Co. KG, 48480 Spelle (DE)
(72) Erfinder: van Bassen, Aloys, 49832 Freren (DE)

(56) Entgegenhaltungen:
- EP-B1- 2 556 744
- US-A- 5 228 280
- US-A1- 2020 404 855

## Beschreibung

Die vorliegende Erfindung betrifft eine Rundballenpresse nach dem Oberbegriff von Anspruch 1.

Erntemaschinen werden in der Landwirtschaft eingesetzt, um Erntegut wie z.B. Heu oder Stroh aufzunehmen und ggf. weiterzuverarbeiten. Die Weiterverarbeitung kann u.a. ein Zerkleinern, ein Pressen und/oder ein Verpacken bzw. Umwickeln des Ernteguts beinhalten. Im Falle einer Ballenpresse wird das Erntegut zu Ballen (z.B. Rundballen oder Quaderballen) verpresst, die anschließend mit einem Bindematerial umwickelt werden können. Als Bindematerial können Schnüre, Netze oder (z.B. im Falle von Gras) Folien verwendet werden, wobei letztere auch außerhalb der Ballenpresse in einem hiervon separaten Ballenwickelgerät appliziert werden können. Bei einer Rundballenpresse wird das Erntegut normalerweise durch eine Pick-up vom Boden aufgenommen und weiter an einen Förderrotor oder Schneidrotor übergeben, der das Erntegut über einen Zuführkanal zur Ballenbildungskammer bzw. Presskammer fördert, wo das eigentliche Verpressen erfolgt. Dort wirken Presselemente auf das Erntegut ein, die auch als Förderelemente wirken und eine umlaufende Bewegung des Ernteguts erzeugen. Bei Pressen mit variabler Kammer wird die effektive Größe der Kammer an die zunehmende Menge von Erntegut angepasst, wobei wenigstens ein endlos umlaufendes, insgesamt flexibles Presselement einen überwiegenden Teil der Presskammer definiert. Das Presselement kann z.B. als Stabkettenförderer mit umlaufenden Ketten und dazwischen verlaufenden Stäben ausgebildet sein oder einen bzw. normalerweise mehrere Pressgurte oder -riemen aufweisen. Der jeweilige Pressriemen ist über eine Mehrzahl von Führungswalzen geführt, wodurch er unter Spannung gehalten wird, und wird beim Betrieb der Rundballenpresse entsprechend einer Umlaufbewegung angetrieben. Am Übergang vom Zuführkanal zur Presskammer kann eine Starterwalze angeordnet sein, die zu Beginn der Ballenbildung das Erntegut unmittelbar gegen das umlaufende Presselement (z.B. die Pressriemen) fördert und im weiteren Verlauf gegen den sukzessive wachsenden Erntegutballen.

Um insbesondere den Start der Ballenbildung zu begünstigen, sind die Pressriemen vergleichsweise nah an der Starterwalze entlanggeführt. Es verbleibt allerdings in jedem Fall ein Zwischenraum, durch den ein Teil des Erntegutes, welcher nicht sofort dem Ballen anhaftet, hindurchfallen kann. Um zu vermeiden, dass dieses Erntegut verloren geht, ist oftmals unterhalb der Starterwalze bzw. unterhalb des Zwischenraums eine Auffangvorrichtung vorgesehen, z.B. ein Auffangblech. Diese fängt herabfallendes Erntegut auf und begünstigt außerdem, dass aufgefangenes Erntegut von der Starterwalze erfasst und erneut dem Ballen zugeführt werden kann. Es kommt immer wieder vor, dass die Rundballenpresse zusammen mit dem Erntegut auch Fremdkörper wie Steine aufnimmt, die im Erntegutstrom mitgeführt werden. Soweit diese zusammen mit dem Erntegut im Ballen verpresst werden, ist dies im Allgemeinen unproblematisch. Allerdings können insbesondere Steine auch in die Auffangvorrichtung fallen und sich dort ansammeln. Zum einen besteht die Gefahr, dass diese Steine erneut erfasst werden und zwischen Starterwalze und Auffangvorrichtung eingeklemmt werden, was zu Beschädigungen führen kann. Zum anderen können insbesondere die vergleichsweise empfindlichen Pressriemen beschädigt werden, falls sie bei ihrer Umlaufbewegung an den Steinen vorbeigeführt werden.

Rundballenpressen sind beispielsweise bekannt aus EP 2 556 744 B1, US 5 228 280 A und US 2020/404855 A1.

Aufgabe der Erfindung ist es, Beschädigungen durch Fremdkörper im Bereich einer Auffangvorrichtung einer Starterwalze vorzubeugen.

Die Aufgabe wird gelöst mit einer Rundballenpresse mit den Merkmalen des unabhängigen Patentanspruchs 1. Vorteilhafte Ausführungsformen sind den abhängigen Ansprüchen entnehmbar.

Dafür wird eine Rundballenpresse geschaffen, aufweisend einen Zuführkanal, eine Presskammer, eine eingangsseitig der Presskammer angeordnete, um eine axiale

Walzenachse in einer Drehrichtung antreibbare Starterwalze, die dazu eingerichtet ist, einen Erntegutstrom aus dem Zuführkanal zur Ballenbildung der Presskammer zuzuführen, sowie eine Auffangvorrichtung für herabfallendes Material, wobei zwischen der Auffangvorrichtung und der Starterwalze ein sich tangential erstreckender Auffangraum ausgebildet ist, wobei die Starterwalze dazu eingerichtet ist, Material im Auffangraum zu erfassen und erneut dem Erntegutstrom zuzuführen.

Die Rundballenpresse ist zum Pressen von landwirtschaftlichem Erntegut zu Rundballen ausgebildet, wobei der eigentliche Pressvorgang in einer Presskammer erfolgt. Bei dem landwirtschaftlichen Erntegut kann es sich insbesondere um Halmgut wie Gras, Stroh oder Heu handeln. Der Begriff "Rundballenpresse" schließt hierbei ausdrücklich auch Maschinen ein, die zusätzlich zu einem Pressen des Ernteguts zu Ballen auch ein Binden bzw. Verpacken der Ballen durchführen. Das Erntegut kann mit einer Pick-up aufgenommen werden und mit einer Fördervorrichtung, z.B. einem Förderrotor, weiter in Richtung der Presskammer gefördert werden. Statt einer einfachen Fördervorrichtung oder zusätzlich zu dieser kann eine Schneidvorrichtung vorgesehen sein, die das Erntegut nicht nur weiterfördert, sondern auch schneidet. In jedem Fall ist ein Zuführkanal vorgesehen, den der Erntegutstrom durchläuft, bevor er zur Presskammer gelangt.

Eingangsseitig der Presskammer, also an einem Eingang derselben, ist eine Starterwalze angeordnet. Diese dient allgemein dazu, den Erntegutstrom aus dem Zuführkanal zur Ballenbildung der Presskammer zuzuführen. Dabei wirkt die Starterwalze typischerweise nicht nur als Zuführelement, sondern auch als Presselement, das im Zusammenspiel mit anderen Elementen der Rundballenpresse einen Druck auf das Erntegut ausübt, durch welchen das Verpressen zumindest eingeleitet wird. Insofern kann die Presskammer teilweise durch die Starterwalze begrenzt sein. Die Größe der Presskammer kann im Rahmen der Erfindung fest oder variabel sein. Die Starterwalze ist um eine Achse drehbar, die hier als Walzenachse bezeichnet wird und durch ihren Verlauf eine axiale Richtung und somit auch eine radiale und tangentiale Richtung definiert. Genauer gesagt, ist die Starterwalze in einer Drehrichtung antreibbar, so dass sie sich um die Walzenachse dreht. Die Walzenachse verläuft normalerweise parallel zur Querrichtung (Y-Richtung) der Rundballenpresse. Um ein effektives Fördern des Ernteguts zu ermöglichen, kann die Starterwalze eine geeignet profilierte Mantelfläche aufweisen. Die Drehrichtung bzw. der Drehsinn der Starterwalze ist die Richtung, in der sich die Starterwalze im Betriebszustand entsprechend ihrem Antrieb dreht.

Weiterhin ist eine Auffangvorrichtung für herabfallendes Material vorgesehen, wobei es sich bei dem herabfallenden Material insbesondere um Erntegut und/oder Fremdkörper handeln kann, die sich aus dem Erntegutstrom herauslösen, ohne in der Presskammer verpresst zu werden. Dies kann z.B. bezüglich des Erntegutstroms hinter der Starterwalze geschehen. Die Auffangvorrichtung ist dazu vorgesehen, dieses Material aufzufangen. Sie kann insbesondere horizontal (in Quer- oder Längsrichtung) neben und/oder vertikal unterhalb der Starterwalze angeordnet sein. Zwischen der Auffangvorrichtung und der Starterwalze ist ein sich tangential erstreckender Auffangraum ausgebildet, wobei die Starterwalze dazu eingerichtet ist, Material im Auffangraum zu erfassen und erneut dem Erntegutstrom zuzuführen. Der Auffangraum erstreckt sich tangential, also über einen gewissen Winkelbereich (z.B. zwischen 90° und 180°) in Umfangsrichtung um die Walzenachse herum. Selbstverständlich erstreckt er sich auch radial, d.h. es ist ein radialer Abstand zwischen Starterwalze und Auffangvorrichtung gegeben. Kleinere Objekte bzw. kleine Mengen von Erntegut können evtl. zunächst im Auffangraum verbleiben, ohne erfasst zu werden. Zumindest größere Mengen Material, insbesondere Erntegut, werden allerdings von der Starterwalze erfasst und entsprechend ihrer Drehbewegung erneut dem Erntegutstrom zugeführt. Insofern kann der Auffangraum auch zumindest teilweise als Rückführraum bezeichnet werden.

Weiterhin weist die Auffangvorrichtung wenigstens ein Auslenkelement auf, das in einer Ruhelage den Auffangraum wenigstens abschnittsweise radial nach außen begrenzt und aus der Ruhelage wenigstens radial nach außen elastisch auslenkbar ist. D.h. die Auffangvorrichtung ist nicht vollständig starr bzw. stationär ausgebildet, sondern weist wenigstens ein Auslenkelement auf, das eine elastische Auslenkbarkeit aus einer Ruhelage aufweist. Die Ruhelage ist die Lage bzw. Position, die das Auslenkelement ohne Einwirkung äußerer Kräfte einnimmt. Zumindest in dieser Ruhelage begrenzt das Auslenkelement den Auffangraum radial nach außen hin, und zwar wenigstens abschnittsweise, d.h. der Auffangraum kann in anderen Abschnitten durch andere Elemente begrenzt sein. Das Auslenkelement erstreckt sich in der Ruhelage in tangentialer Richtung über einen gewissen Winkel um die Walzenachse. Dabei ist das Auslenkelement wenigstens in radialer Richtung nach außen, optional auch in tangentialer und/oder axialer Richtung, aus der Ruhelage auslenkbar. D.h. wenigstens ein Teil des Auslenkelements bewegt sich bei entsprechender Krafteinwirkung radial nach außen und kehrt bei Ende der Krafteinwirkung in die Ruhelage zurück. Die entsprechende Krafteinwirkung kann z.B. auf Material zurückgehen, welches sich im Auffangraum befindet, insbesondere Fremdkörper wie Steine, die zwischen Starterwalze und Auslenkelement eingeklemmt sind. Die Elastizität kann so gewählt werden, dass beim Normalbetrieb, wenn sich z.B. nur Erntegut im Auffangraum befindet, keine (nennenswerte) Auslenkung erfolgt. Wird aber z.B. ein Fremdkörper wie ein Stein eingeklemmt, führt dies zu einer erheblichen Auslenkung des Auslenkelements, man könnte auch sagen, dieses gibt elastisch nach. Somit kann ein eingeklemmter Fremdkörper wieder freikommen und z.B. von der Starterwalze aus dem Auffangraum ausgefördert werden. Fremdkörper werden nicht dauerhaft eingeklemmt und verbleiben nicht über längere Zeit im Auffangraum. Somit wird das Risiko einer Beschädigung der Starterwalze oder anderer Elemente deutlich reduziert.

Erfindungsgemäß ist wenigstens ein Auslenkelement derart aus der Ruhelage wenigstens radial nach außen elastisch auslenkbar, dass hierdurch eine Austrittsöffnung für Material aus dem Auffangraum wenigstens erweiterbar ist, d.h. entweder erweiterbar oder herstellbar. Durch die genannte Austrittsöffnung kann Material aus dem Auffangraum austreten, d.h. sie ermöglicht das Austreten von Material aus dem Auffangraum, z.B. nach unten, so dass das Material der Schwerkraft folgend herabfällt. Dabei geht es vor allem um Fremdkörper, die unter das Erntegut gelangt sind. In der Ruhelage des Auslenkelements ist die Austrittsöffnung entweder nicht vorhanden oder kleiner, z.B. so klein, dass kein nennenswerter Materialaustritt möglich ist. Wird das Auslenkelement radial nach außen ausgelenkt, entsteht hierdurch die Austrittsöffnung bzw. sie wird vergrößert, z.B. von wenigen Millimetern auf einige Zentimeter, so dass auch größere Fremdkörper wie Steine hindurchgelangen und den Auffangraum verlassen können. Die Austrittsöffnung wird normalerweise wenigstens teilweise durch das Auslenkelement begrenzt, was die Möglichkeit einschließt, dass die Austrittsöffnung innerhalb des Auslenkelements geöffnet werden kann. Durch die Austrittsöffnung wird also das Entfernen von Fremdkörper aus dem Auffangraum unterstützt bzw. ermöglicht. Derartige Fremdkörper verbleiben nur zeitweise im Auffangraum und können diesen dann durch die Austrittsöffnung verlassen, wodurch sich das Risiko einer Beschädigung der Starterwalze oder anderer Elemente weiter verringert.

Gemäß einer typischen Ausführungsform weist die Rundballenpresse wenigstens ein endloses, umlaufend antreibbares Presselement auf, welches die Presskammer wenigstens teilweise begrenzt, wobei die Auffangvorrichtung wenigstens teilweise vertikal unterhalb eines zwischen der Starterwalze und dem Presselement ausgebildeten Zwischenraums angeordnet ist. Das Presselement begrenzt die Presskammer, in welcher der Erntegutballen geformt wird, und definiert somit ihre effektive Größe. Es kann insbesondere als endloser Pressriemen ausgebildet sein, alternativ aber auch z.B. als Kettenstabförderer. In jedem Fall ist es umlaufend antreibbar, wozu es z.B. über eine Mehrzahl von Führungswalzen geführt sein kann, von denen wenigstens eine mit einem Antrieb verbunden ist. Zwischen dem Presselement und der Starterwalze ist ein Zwischenraum ausgebildet, durch den Material fallen kann, welches von der darunter angeordneten Auffangvorrichtung aufgefangen wird. Um eine effektive Formung des Ballens zu unterstützen, sollte der Abstand zwischen Starterwalze und Presselement nicht allzu groß sein. Dies wiederum bedeutet, dass der Auffangraum zumindest in der Nähe des Presselements angeordnet ist, so dass in dem Auffangraum befindliche Fremdkörper wie Steine auch potenziell die Gefahr einer Beschädigung des Presselements mit sich bringen. Eben diese Gefahr kann durch ein erfindungsgemäß vorgesehenes Auslenkelement verringert werden. Der o.g. Zwischenraum kann unmittelbar in den Auffangraum übergehen.

Die elastische Auslenkbarkeit kann dadurch realisiert sein, dass das Auslenkelement in sich starr ist, aber über ein elastisches Element bzw. Federelement mit einem Rahmen der Rundballenpresse verbunden ist. Bevorzugt ist allerdings wenigstens ein Auslenkelement elastisch verformbar. D.h. das entsprechende Auslenkelement ist wenigstens teilweise aus einem elastischen Material gebildet. Das Material kann in Abhängigkeit von unterschiedlichen Faktoren gewählt werden, z.B. Kosten, Gewicht, zu erwartender Belastung, gewünschte Elastizität etc. Insbesondere kann das Auslenkelement wenigstens teilweise aus einem Elastomer wie Gummi oder Silikon bestehen. Elastomere erlauben dem Auslenkelement sich auch bei lokal einwirkenden Kräften elastisch zu verformen, die keine nennenswerte Auslenkung des Auslenkelements insgesamt bewirken, wodurch Beschädigungen und Verschleiß verhindert werden können.

Bevorzugt ist ein erstes Auslenkelement wenigstens teilweise vertikal unterhalb der Starterwalze angeordnet. Der Begriff "vertikal" ist hierbei in Bezug auf die Hochrichtung der Rundballenpresse zu verstehen, die bei normaler Ausrichtung der Rundballenpresse parallel bzw. antiparallel zur Richtung der Schwerkraft verläuft. Diese Anordnung kann aus verschiedenen Gründen vorteilhaft sein. Aufgrund des eigenen Gewichts bewegen sich Fremdkörper wie Steine innerhalb des Auffangraums tendenziell zum tiefsten Punkt, welcher sich typischerweise unterhalb der Starterwalze befindet. Außerdem ist der Abstand zwischen Starterwalze und Auffangvorrichtung im unteren Bereich oftmals besonders gering, damit die Starterwalze dort das Erntegut optimal erfassen und anschließend aufwärts befördern kann. Der geringe Abstand macht es leichter, z.B. einen Stein mit der Starterwalze so gegen das Auslenkelement zu drücken, dass dieses nennenswert ausgelenkt wird. Wird ein solches Auslenkelement radial ausgelenkt, entspricht dies einer Auslenkung nach unten (wenngleich nicht unbedingt senkrecht nach unten). Insbesondere kann die Austrittsöffnung durch Auslenkung des ersten Auslenkelements herstellbar bzw. erweiterbar sein.

Eine Ausführungsform sieht vor, dass sich das erste Auslenkelement ausgehend von einen positionsfest montierten ersten Montagebereich tangential entsprechend der Drehrichtung der Starterwalze erstreckt. Der erste Montagebereich ist ein Bereich des ersten Auslenkelements, der direkt oder indirekt am Rahmen der Rundballenpresse montiert und insofern nicht bzw. nur vernachlässigbar auslenkbar ist. Bspw. kann das erste Auslenkelement dort angeschraubt oder eingeklemmt sein. Von diesem Montagebereich aus erstreckt sich das erste Auslenkelement bezüglich der tangentialen Richtung entsprechend der Drehrichtung der Starterwalze. Normalerweise bewegt sich dabei der obere Teil der Starterwalze entgegen der Fahrtrichtung und der untere Teil in Fahrtrichtung. In diesem Fall verläuft das wenigstens teilweise vertikal unterhalb der Starterwalze angeordnete erste Auslenkelement (bezüglich der Fahrtrichtung) von hinten nach vorne, wenn auch im Allgemeinen nicht antiparallel zur Fahrtrichtung. Vereinfacht könnte man sagen, dass erste Auslenkelement in Drehrichtung orientiert ist und nicht entgegen der Drehrichtung. In letzterem Fall bestünde u.U. die Gefahr, dass das äußerste Ende des ersten Auslenkelements von der Starterwalze direkt oder indirekt, z.B. über einen eingeklemmten Stein, erfasst und entgegen seiner Verlaufsrichtung umgebogen wird. Dies ist bei einem Verlauf in Drehrichtung ausgeschlossen.

Normalerweise zusätzlich, ggf. aber auch alternativ, kann ein zweites Auslenkelement wenigstens teilweise zwischen dem Auffangraum und dem Presselement angeordnet sein. Funktional kann man davon sprechen, dass dieses zweite Auslenkelement den Auffangraum gegenüber dem Presselement abschirmt bzw. umgekehrt. Somit können auch Fremdkörper wie Steine besser von dem Presselement ferngehalten werden, was bspw. bei einem Pressriemen besonders wichtig ist, um eine Beschädigung derselben zu verhindern. Eine Funktion des zweiten Auslenkelements kann auch darin bestehen, zu verhindern, dass Fremdkörper auf Seiten des Presseelements aus dem Auffangraum gelangen. Insofern kann es bevorzugt sein, dass das zweite Auslenkelement wenigstens abschnittsweise in geringem Abstand zum Presselement angeordnet ist. Dabei ist sogar ein Kontakt zwischen dem Presselement und dem zweiten Auslenkelement möglich, da letzteres aufgrund seiner elastischen Auslenkbarkeit ausweichen kann, ohne das Presselement zu beschädigen oder selbst beschädigt zu werden. Normalerweise ist keine Austrittsöffnung durch radiale Auslenkung des zweiten Auslenkelements herstellbar oder erweiterbar.

Bevorzugt verläuft das zweite Auslenkelement von einen positionsfest montierten zweiten Montagebereich in Richtung auf einen Nachbarabschnitt des Presselements, in spitzem Winkel gegenüber einer Bewegungsrichtung des Presselements in dem Nachbarabschnitt. Der zweite Montagebereich ist ein Bereich des zweiten Auslenkelements, der direkt oder indirekt am Rahmen der Rundballenpresse montiert und insofern nicht bzw. nur vernachlässigbar auslenkbar ist. Dort kann das erste Auslenkelement angeschraubt, eingeklemmt oder anderweitig befestigt sein. Von diesem Montagebereich aus verläuft das zweite Auslenkelement in Richtung auf einen Nachbarabschnitt des Presseelements. Der Nachbarabschnitt ist allgemein der Abschnitt, dem das zweite Auslenkelement am nächsten kommt. Unter Umständen kann es den Nachbarabschnitt sogar berühren, was wie oben geschildert unproblematisch ist, da das Auslenkelement elastisch nachgeben kann. Ein geringer Abstand zwischen dem zweiten Auslenkelement und dem Presselement bzw. dem Nachbarabschnitt ist vorteilhaft, um Erntegut ebenso wie Fremdkörper daran zu hindern, den Auffangraum zu verlassen. Fremdkörper wie Steine könnten andernfalls an dieser Stelle zwischen zweites Auslenkelement und Presselement gelangen und z.B. letzteres beschädigen. Aufgrund der Bewegung des Presselements wird dieses im Betriebszustand gewissermaßen am zweiten Auslenkelement vorbeigeführt, weshalb nacheinander immer andere Teile des Presselements den Nachbarabschnitt bilden. Betrachtet man die Bewegungsrichtung des Presselements in dem Nachbarabschnitt (im Betriebszustand), so verläuft das zweite Auslenkelement in spitzem Winkel hierzu, also in einem Winkel von weniger als 90°. Der Winkel kann insbesondere weniger als 70° oder weniger als 50° betragen. Das zweite Auslenkelement ist also "mit" der Bewegungsrichtung des Presselements ausgerichtet, wodurch verhindert wird, dass das Auslenkelement umschlägt oder umgebogen wird, falls es mit dem laufenden Presselement in Kontakt gerät. Somit kann das zweite Auslenkelement in geringem Abstand (z.B. wenige Millimeter) zum Nachbarabschnitt angeordnet sein oder diesen sogar wenigstens zeitweise berühren. Dies verbessert wiederum die Abgrenzung des Auffangbereichs gegenüber dem Presselement.

Die Auffangvorrichtung könnte ausschließlich durch ein oder mehrere Auslenkelemente gebildet sein. Gemäß einer anderen Ausführungsform weist die Auffangvorrichtung ein stationäres Auffangelement auf, das benachbart zu einem Auslenkelement angeordnet ist, wobei durch Auslenkung des Auslenkelements eine Austrittsöffnung zwischen dem Auffangelement und dem Auslenkelement wenigstens erweiterbar ist. Das Auffangelement ist stationär gegenüber dem Rahmen der Rundballenpresse montiert und nicht bzw. nur in vernachlässigbarer Weise auslenkbar. Es kann im Vergleich zu dem Auslenkelement als starr angesehen werden. Es kann beispielsweise aus Metall als Blechteil oder gegossenes Teil hergestellt sein. Das Auffangelement ist benachbart zu einem Auslenkelement angeordnet, zumindest wenn letzteres sich in der Ruhelage befindet. Der Abstand beträgt normalerweise höchstens wenige Millimeter, um zu vermeiden, dass Erntegut zwischen den beiden Elementen hindurchgelangt. Dies schließt auch die Möglichkeit ein, dass sich beide Elemente berühren. Wird das Auslenkelement ausgelenkt, entsteht hierdurch die Austrittsöffnung bzw. sie vergrößert sich, z.B. auf einige Zentimeter, so dass auch Fremdkörper wie Steine hindurchgelangen und den Auffangraum verlassen können. Das Auslenkelement kann hier wie eine Tür oder Luke wirken, die sich durch elastische Auslenkung öffnet. Das hier genannte Auslenkelement kann insbesondere ein o.g. erstes Auslenkelement sein.

Um zu verhindern, dass beispielsweise Erntegut schon bei geringfügiger Auslenkung des Auslenkelements durch die Austrittsöffnung verloren geht, können zum einen der Abstand zwischen Auffangelement und Auslenkelement sowie zum anderen deren jeweilige Geometrie angepasst werden. Gemäß einer Ausgestaltung weist das Auffangelement einen dem Auslenkelement zugewandten, sich radial erstreckenden Flanschabschnitt auf. Der Flanschabschnitt kann zum einen der mechanischen Stabilisierung des Auffangelements dienen, z.B. wenn dieses als Blechteil ausgebildet ist. Zum anderen wird aber auch die effektive Ausdehnung des Auffangelements in radialer Richtung vergrößert.

Durch die radiale Ausdehnung des Flanschabschnitts kann bevorzugt erreicht werden, dass sich das Auslenkelement bei geringer Auslenkung entlang des Flanschabschnitts und benachbart zu diesem bewegt, um Material wenigstens überwiegend zwischen Flanschabschnitt und Auslenkelement zurückzuhalten, und sich bei größerer Auslenkung vom Flanschabschnitt fort bewegt, um Material durch eine Austrittsöffnung zwischen Flanschabschnitt und Auslenkelement aus dem Auffangraum abzugeben. D.h, wenn das Auslenkelement geringfügig ausgelenkt wird, bleibt der Abstand zum Flanschabschnitt zunächst noch gering, so dass eine allenfalls kleine Austrittsöffnung entsteht. Material, insbesondere größere Fremdkörper wie Steine, kann die Austrittsöffnung kaum passieren und wird überwiegend zurückgehalten. Erst wenn sich das Auslenkelement weiter verformt, entsteht eine wesentliche Austrittsöffnung, durch die z.B. auch Steine den Auffangraum verlassen können. Beispielsweise kann dies der Fall sein, wenn sich das Auslenkelement in radialer Richtung über den Flanschabschnitt hinaus bewegt. Alternativ oder zusätzlich kann die Erweiterung der Austrittsöffnung daraus resultieren, dass das Auslenkelement eine bogenartige Biege- und/oder Schwenkbewegung ausführt, wobei die Bewegung zunächst annähernd parallel zum Flanschabschnitt erfolgt, im weiteren Verlauf aber in zunehmenden Winkel zu diesem, wodurch der Abstand erheblich, insbesondere nicht-linear, zunimmt.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Schnittdarstellung einer erfindungsgemäßen Rundballenpresse;
- Fig. 2: eine Detaildarstellung der Rundballenpresse aus Fig. 1 mit einem Auslenkelement einer Auffangvorrichtung in Ruhelage; und
- Fig. 3: eine Detaildarstellung entsprechend Fig.2 mit dem Auslenkelement in einer ausgelenkten Lage.

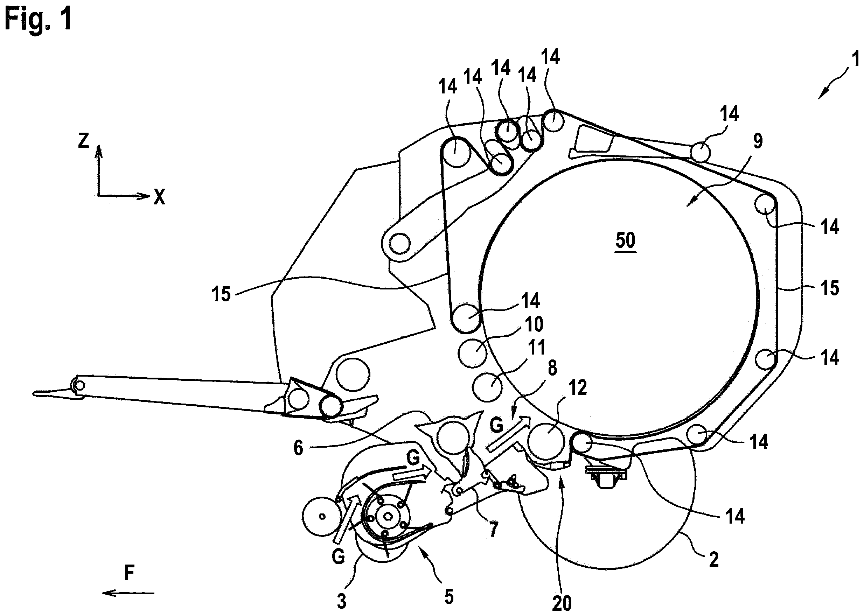

Fig. 1 zeigt eine Rundballenpresse 1 gemäß der vorliegenden Erfindung. Die Rundballenpresse 1 ist in bekannter Weise dazu vorgesehen, von einer Zugmaschine bzw. einem Traktor (nicht dargestellt) gezogen zu werden. Die Erfindung ist aber nicht auf gezogene oder getragene Rundballenpressen 1 beschränkt, sondern umfasst auch selbstfahrende Rundballenpressen 1. Eine Längsrichtung X der Rundballenpresse 1 weist entgegen einer Fahrtrichtung F nach hinten und eine Hochrichtung Z weist nach oben. An einem Rahmen der Rundballenpresse 1 sind Laufrädern 2 drehbar gelagert, auf welchen die Rundballenpresse 1 aufsteht. In Fahrtrichtung F vorderseitig ist eine Pick-up 5 erkennbar, die von Hilfsrädern 3 gestützt wird und im Betrieb (bezogen auf Fig. 1) im Uhrzeigersinn rotiert. Sie dient dazu, Erntegut 40, genauer gesagt Halmgut wie Stroh, Heu oder Gras, vom Boden aufzunehmen und weiterzufördern. Von der Pick-up 5 gelangt das Erntegut 40 zu einem Schneidrotor 6, der entgegen dem Uhrzeigersinn rotiert. Er weist eine Mehrzahl von Zinken auf, die das Erntegut 40 ergreifen, es im Zusammenwirken mit feststehenden Messern 7 schneiden und weiter entgegen der Fahrtrichtung F und leicht aufwärts durch einen Zuführkanal 8 transportieren. Anstelle des Schneidrotors 6 könnte auch ein Förderrotor eingesetzt werden, der das Erntegut 40 nur fördert und nicht zerkleinert.

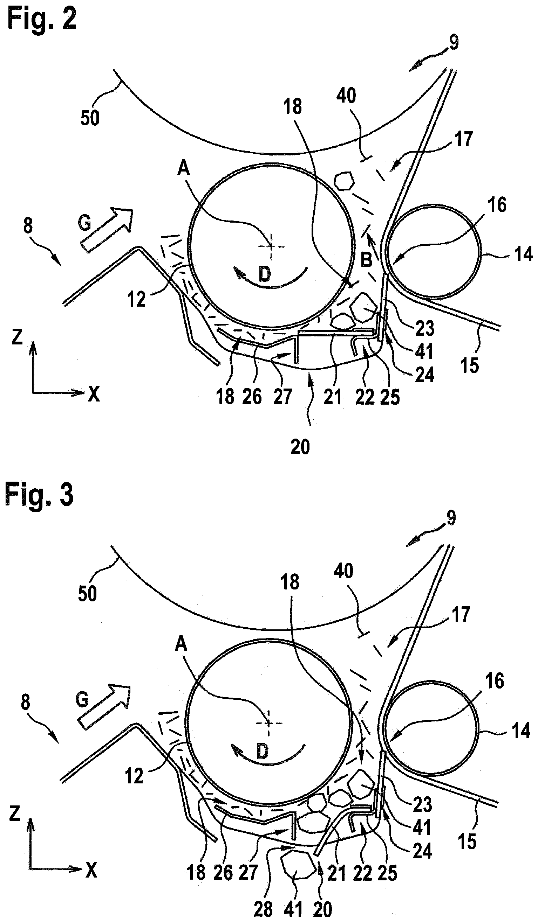

Insgesamt verläuft ein Erntegutstrom G von der Pick-up 5 über den Schneidrotor 6 und den Zuführkanal 8 zu einer Presskammer 9, in welcher die eigentliche Ballenbildung und das Verpressen des Ernteguts 40 zu einem Erntegutballen 50 erfolgen. Hierzu sind drei Presswalzen 10, 11, 12 sowie als weitere Presselemente eine Mehrzahl von (senkrecht zur Zeichenebene nebeneinander angeordneten) endlosen Pressriemen 15 vorgesehen, die die Presskammer 9 definieren und eine variable Größe derselben ermöglichen. Die Pressriemen 15 sind über eine Mehrzahl von Führungswalzen 14 geführt, von denen die meisten innenseitig der Pressriemen 15 angeordnet sind und im Uhrzeigersinn rotieren. Eingangsseitig der Presskammer 9, gegenüber dem Zuführkanal 8 nach unten versetzt, ist eine als Starterwalze 12 fungierende Presswalze 10-12 vorgesehen. Wie insbesondere in der Detailansicht in Fig.2 und 3 erkennbar ist, ist die Starterwalze 12 um eine axial verlaufende Walzenachse A entsprechend einer Drehrichtung D antreibbar, d.h. bezogen auf die Figuren im Uhrzeigersinn. Die Starterwalze 12 übernimmt den Erntegutstrom G aus dem Zuführkanal 8 und führt ihn zur Ballenbildung in die Presskammer 9. Der Erntegutstrom G verläuft dabei oberseitig der Starterwalze 12. Zu Beginn der Ballenbildung ist die Presskammer 9 effektiv im Wesentlichen durch einen Zwischenraum 17 zwischen der Starterwalze 12 und den Pressriemen 15 gegeben. Wenn der Erntegutballen 50 anwächst, wird er in zunehmendem Maße durch die Pressriemen 15 gestützt sowie schließlich durch die weiteren Presswalzen 10, 11. Während der Ballenbildung fällt immer wieder Material 40, 41 durch einen Zwischenraum 17 zwischen der Starterwalze 12 und den Pressriemen 15. Hierbei handelt es sich zum einen um Erntegut 40, zum anderen aber auch um Fremdkörper 41 wie Steine. Derartige Fremdkörper 41 werden zum Teil auch im Erntegutballen 50 mit verpresst, was grundsätzlich unschädlich ist.

Um einen übermäßigen Verlust von Erntegut 40 zu verhindern, ist unterhalb sowie horizontal neben (bzw. in Längsrichtung X hinter) der Starterwalze 12 eine Auffangvorrichtung 20 angeordnet, die dazu vorgesehen ist, herabfallendes Material 40, 41 aufzufangen. Zu diesem Zweck ist sie teilweise vertikal unterhalb des Zwischenraums 17 angeordnet. Insgesamt ist zwischen der Auffangvorrichtung 20 und der Starterwalze 12 ein sich tangential erstreckender Auffangraum 18 ausgebildet, der sich an den Zwischenraum 17 anschließt. Herabfallendes Material 40, 41 sammelt sich in dem Auffangraum 18, bevor es von der Starterwalze 12 erfasst und ihrer Drehbewegung entsprechend erneut dem Erntegutstrom G zugeführt werden kann. Ein potenzielles Problem stellen hierbei Fremdkörper 41 dar, die innerhalb des Auffangraums 18 zusammen mit dem Erntegut 40 angesammelt werden, wie in Fig. 2 angedeutet ist. Diese könnten zwischen der Starterwalze 12 und der Auffangvorrichtung 20 eingeklemmt werden und eine Blockade oder Beschädigung verursachen. Bei erheblichen Mengen von Fremdkörpern 41 wie Steinen im Auffangraum 18 besteht zudem die Gefahr, dass die in der Nähe vorbeigeführten Pressriemen 15 beschädigt werden könnten.

Um die genannten Probleme zu vermeiden, weist die Auffangvorrichtung 20 zwei Auslenkelemente 21, 23 auf, die jeweils aus einer Ruhelage, welche in Fig. 2 dargestellt ist, radial auslenkbar sind. Bei der hier gezeigten Ausgestaltung sind beide Auslenkelemente 21, 23 durch platten- bzw. streifenförmige Gummielemente gebildet. Sie sind jeweils an einer stationären Halterung 25 befestigt. Ein erstes Auslenkelement 21 begrenzt zusammen mit einem stationären Auffangelement 26, in diesem Fall einem Auffangblech, den Auffangraum 18 nach unten hin, während ein zweites Auslenkelement 23 den Auffangraum 18 nach hinten, zu den Pressriemen 15 hin, begrenzt. Das zweite Auslenkelement 23 verläuft von einem zweiten Montagebereich 24 an der Halterung 25 zu einem Nachbarabschnitt 16 der Pressriemen 15 hin. Es kann diesen Nachbarabschnitt 16 wenigstens zeitweise sogar berühren. Bezogen auf eine Bewegungsrichtung B der Pressriemen 15 in diesem Nachbarabschnitt 16, verläuft das zweite Auslenkelement 23 (in seiner Ruhelage) in einem spitzen Winkel, im vorliegenden Fall ca. 45°. Dieser Verlauf stellt sicher, dass es bei einer Berührung zwischen den Pressriemen 15 und dem zweiten Auslenkelement 23 nicht zu einem Umknicken oder Umschlagen des Letzteren kommt. Deshalb, und aufgrund der Elastizität des zweiten Auslenkelements 23, kann dieses sehr dicht an den Pressriemen 15 oder sogar in Kontakt mit diesen angeordnet sein, wodurch eine optimale Abdichtung in diesem Bereich erreicht wird, so dass nahezu kein Erntegut 40 verloren geht. Insgesamt schirmt das zweite Auslenkelement 23 die Pressriemen 15 auch gegen den Auffangraum 18 ab, wodurch z.B. das Risiko einer Beschädigung durch Fremdkörper 41 wie Steine verringert wird.

Außerdem ermöglicht die elastische Struktur des zweiten Auslenkelements 23 ein elastisches Nachgeben, falls Fremdkörper 41 zwischen der Starterwalze 12 und dem zweiten Auslenkelement 23 eingeklemmt werden, und es kommt zu keiner Blockade, sondern die Fremdkörper 41 können im Auffangraum 18 weiter nach unten gelangen, bspw. in den Bereich zwischen dem ersten Auslenkelement 21 und der Starterwalze 18. Auch dort kann es zu keinem dauerhaften Einklemmen der Fremdkörper 41 kommen, da das erste Auslenkelement 21 elastisch nachgeben kann, wobei es schließlich nach Art einer sich öffnenden Tür eine Austrittsöffnung 28 zwischen sich und dem Auffangelement 26 freigibt, was in Fig.3 dargestellt ist. Durch diese Austrittsöffnung 28 können Fremdkörper 41 aus dem Auffangraum 18 nach unten fallen, wo sie bspw. auf dem Feld liegen bleiben. Wie in Fig. 2 und 3 erkennbar ist, weist das Auffangelement 26 einen dem ersten Auslenkelement 21 zugewandten, sich radial erstreckenden Flanschabschnitt 27 auf. Dieser dient einerseits der strukturellen Stabilisierung des Auffangelements 26, andererseits sorgt er dafür, dass bei einer geringfügigen Auslenkung des ersten Auslenkelements 21 keine nennenswerte Austrittsöffnung 28 entsteht, da sich die Spitze des ersten Auslenkelements 21 zunächst am Flanschabschnitt 27 entlangbewegt. Somit werden Erntegut 40 und Fremdkörper 41 zunächst zwischen Auslenkelement 21 und Flanschabschnitt 27 zurückgehalten und können sich vor dem Flanschabschnitt 27 ansammeln bzw. anstauen. Erst bei größerer Auslenkung öffnet sich die Austrittsöffnung 28 wie in Fig.3 dargestellt, so dass insbesondere zuvor angesammelte Fremdkörper 41 wie Steine aus dem Auffangraum 18 herausfallen können. Durch diese gewissermaßen verzögerte Öffnung wird vermieden, dass unnötig viel Erntegut 40 verloren geht.

## Patentansprüche

1. Rundballenpresse (1), aufweisend einen Zuführkanal (8), eine Presskammer (9), eine eingangsseitig der Presskammer (9) angeordnete, um eine axiale Walzenachse (A) in einer Drehrichtung (D) antreibbare Starterwalze (12), die dazu eingerichtet ist, einen Erntegutstrom (G) aus dem Zuführkanal (8) zur Ballenbildung der Presskammer (9) zuzuführen, sowie eine Auffangvorrichtung (20) für herabfallendes Material (40, 41), wobei zwischen der Auffangvorrichtung (20) und der Starterwalze (12) ein sich tangential erstreckender Auffangraum (18) ausgebildet ist, und wobei die Starterwalze (12) dazu eingerichtet ist, Material (40, 41) im Auffangraum (18) zu erfassen und erneut dem Erntegutstrom (G) zuzuführen, wobei die Auffangvorrichtung (20) wenigstens ein Auslenkelement (21, 23) aufweist, das in einer Ruhelage den Auffangraum (18) wenigstens abschnittsweise radial nach außen begrenzt und aus der Ruhelage wenigstens radial nach außen elastisch auslenkbar ist,
**dadurch gekennzeichnet, dass** das wenigstens eine Auslenkelement (21, 23) derart aus der Ruhelage wenigstens radial nach außen elastisch auslenkbar ist, dass hierdurch eine Austrittsöffnung (28) für Material (40, 41) aus dem Auffangraum (18) wenigstens erweiterbar ist.

2. Rundballenpresse (1) nach Anspruch 1, **dadurch gekennzeichnet, dass** diese wenigstens ein endloses, umlaufend antreibbares Presselement (15) aufweist, welches die Presskammer (9) wenigstens teilweise begrenzt, wobei die Auffangvorrichtung (20) wenigstens teilweise vertikal unterhalb eines zwischen der Starterwalze (12) und dem Presselement (15) ausgebildeten Zwischenraums (17) angeordnet ist.

3. Rundballenpresse (1) nach einem der vorherigen Ansprüche, **dadurch gekennzeichnet, dass** wenigstens ein Auslenkelement (21, 23) elastisch verform bar ist.

4. Rundballenpresse (1) nach einem der vorherigen Ansprüche, **dadurch gekennzeichnet, dass** ein erstes Auslenkelement (21) wenigstens teilweise vertikal unterhalb der Starterwalze (12) angeordnet ist.

5. Rundballenpresse (1) nach Anpruch4, **dadurch gekennzeichnet, dass** sich das erste Auslenkelement (21) ausgehend von einen positionsfest montierten ersten Montagebereich (22) tangential entsprechend der Drehrichtung (D) der Starterwalze erstreckt.

6. Rundballenpresse (1) nach einem der vorherigen Ansprüche, **dadurch gekennzeichnet, dass** ein zweites Auslenkelement (23) wenigstens teilweise zwischen dem Auffangraum (18) und dem Presselement (15) angeordnet ist.

7. Rundballenpresse (1) nach Anspruch 6, **dadurch gekennzeichnet, dass** das zweite Auslenkelement (23) von einen positionsfest montierten zweiten Montagebereich (24) in Richtung auf einen Nachbarabschnitt (16) des Presselements (15) verläuft, in spitzem Winkel gegenüber einer Bewegungsrichtung (B) des Presselements (15) in dem Nachbarabschnitt (16).

8. Rundballenpresse (1) nach einem der vorherigen Ansprüche, **dadurch gekennzeichnet, dass** die Auffangvorrichtung (20) ein stationäres Auffangelement (26) aufweist, das benachbart zu dem Auslenkelement (21, 23) angeordnet ist, wobei durch Auslenkung des Auslenkelements (21, 23) die Austrittsöffnung (28) zwischen dem Auffangelement (26) und dem Auslenkelement (21, 23) wenigstens erweiterbar ist.

9. Rundballenpresse (1) nach einem der vorherigen Ansprüche, **dadurch gekennzeichnet, dass** das Auffangelement (26) einen dem Auslenkelement (21, 23) zugewandten, sich radial erstreckenden Flanschabschnitt (27) aufweist.

10. Rundballenpresse (1) nach Anspruch 9, **dadurch gekennzeichnet**, sich das Auslenkelement (21, 23) bei geringer Auslenkung entlang des Flanschabschnitts (27) und benachbart zu diesem bewegt, um Material (40, 41) wenigstens überwiegend zwischen Flanschabschnitt und Auslenkelement (21, 23) zurückzuhalten, und sich bei größerer Auslenkung vom Flanschabschnitt (27) fort bewegt, um Material (40, 41) durch die Austrittsöffnung (28) zwischen Flanschabschnitt (27) und Auslenkelement (21, 23) aus dem Auffangraum abzugeben.

## Claims

1. Round baler (1), comprising a feed channel (8), a pressing chamber (9), a starter roller (12) which is arranged on the input side of the pressing chamber (9), can be driven about an axial roller axis (A) in a direction of rotation (D) and is set up to feed a crop stream (G) from the feed channel (8) to the pressing chamber (9), and comprising a collecting device (20) for falling material (40, 41), a tangentially extending collecting space (18) being formed between the collecting device (20) and the starter roller (12), and the starter roller (12) being designed to detect material (40, 41) in the collecting space (18) and to re-feed it to the crop stream (G), the collecting device (20) having at least one deflection element (21, 23), which, in an idle position, at least partially radially outwardly delimits the collecting space (18) and can be at least radially outwardly resiliently deflected from the idle position,
**characterized in that**
the at least one deflection element (21, 23) can be at least radially outwardly resiliently deflected from the idle position such that an outlet opening (28) for material (40, 41) from the collecting space (18) can be at least widened thereby.

2. Round baler (1) according to claim 1, **characterized in that** it has at least one endless, circumferentially drivable pressing element (15) which at least partially delimits the pressing chamber (9), the collecting device (20) being arranged at least partially vertically below a gap (17) formed between the starter roller (12) and the pressing element (15).

3. Round baler (1) according to any of the preceding claims,
**characterized in that** at least one deflection element (21, 23) is elastically deformable.

4. Round baler (1) according to any of the preceding claims,
**characterized in that** a first deflection element (21) is arranged at least partially vertically below the starter roller (12).

5. Round baler (1) according to claim 4, **characterized in that** the first deflection element (21) extends tangentially in accordance with the direction of rotation (D) of the starter roller starting from a positionally fixedly mounted first mounting region (22).

6. Round baler (1) according to any of the preceding claims,
**characterized in that** a second deflection element (23) is arranged at least partially between the collecting space (18) and the pressing element (15).

7. Round baler (1) according to claim 6, **characterized in that** the second deflection element (23) extends from a positionally fixedly mounted second mounting region (24) toward an adjacent portion (16) of the pressing element (15), at an acute angle relative to a movement direction (B) of the pressing element (15) in the adjacent portion (16).

8. Round baler (1) according to any of the preceding claims,
**characterized in that** the collection device (20) has a stationary collecting element (26) which is arranged adjacently to the deflection element (21, 23), it being possible to at least widen the outlet opening (28) between the collecting element (26) and the deflection element (21, 23) by deflecting the deflection element (21, 23).

9. Round baler (1) according to any of the preceding claims,
**characterized in that** the collecting element (26) has a radially extending flange portion (27) facing the deflection element (21, 23).

10. Round baler (1) according to claim 9, **characterized in that** the deflection element (21, 23), when slightly deflected, moves along the flange portion (27) and adjacent thereto in order to keep material (40, 41) at least predominantly between the flange portion and the deflection element (21, 23), and, when the deflection is greater, moves away from the flange portion (27) in order to dispense material (40, 41) from the collecting space through the outlet opening (28) between the flange portion (27) and the deflection element (21, 23).

## Revendications

1. Presse à balles rondes (1) comprenant un canal d'alimentation (8), une chambre de presse (9), un rouleau de démarrage (12) entraîné autour d'un axe (A), axial dans un sens de rotation (D), pour fournir la veine de produits récoltés (G) du canal d'alimentation (8) à la chambre de presse (9) pour former une balle ainsi qu'un dispositif récupérateur (20) pour les produits qui tombent (40, 41), un espace récupérateur (18) allant tangentiellement entre le dispositif récupérateur (20) et le rouleau de démarrage (12), et
le rouleau de démarrage (12) est conçu pour prendre les produits (40, 41) de l'espace récupérateur (18) et les renvoyer dans la veine de produits récoltés (G),
le dispositif récupérateur (20) ayant au moins un élément déflecteur (21, 23) qui, en position de repos, délimite l'espace récupérateur (18) au moins par segments, radialement par rapport à l'extérieur et qui peut être dévié élastiquement radialement vers l'extérieur à partir de la position de repos,
presse **caractérisée en ce que**
au moins l'élément déflecteur (21, 23) peut être dévié élastiquement, au moins radialement vers l'extérieur à partir de la position de repos pour élargir ainsi l'orifice de sortie (28) pour les produits (40, 41) à partir de l'espace récupérateur (18).

2. Presse à balles rondes (1) selon la revendication 1,
**caractérisée en ce qu'**elle comprend :
au moins un élément de presse (15) sans fin, entraîné en circulation, et qui délimite au moins partiellement la chambre de presse (9),
le dispositif récupérateur (20) étant au moins en partie à la verticale en dessous de l'intervalle (17) entre le rouleau de démarrage (12) et l'élément de presse (15).

3. Presse à balles rondes (1) selon l'une des revendications précédentes, **caractérisée en ce que**
au moins un élément déflecteur (21, 23) est déformable élastiquement.

4. Presse à balles rondes (1) selon l'une des revendications précédentes, **caractérisée par**
un premier élément déflecteur (21) installé au moins en partie à la verticale sous le rouleau de démarrage (12).

5. Presse à balles rondes (1) selon la revendication 4,
**caractérisée en ce que**
le premier élément déflecteur (21) s'étend à partir d'une première zone de montage (22) en position fixe, tangentiellement selon le sens de rotation (D) du rouleau de démarrage.

6. Presse à balles rondes (1) selon l'une des revendications précédentes, **caractérisée par**
un second élément déflecteur (23) installé au moins en partie entre l'espace récupérateur (18) et l'élément de presse (15).

7. Presse à balles rondes (1) selon la revendication 6,
**caractérisée en ce que**
le second élément déflecteur (23) s'étend entre une seconde zone de montage (24) en position fixe, en direction d'un segment voisin (16) de l'élément de presse (15), en faisant un angle aigu par rapport à la direction de déplacement (B) de l'élément de presse (15) dans le segment voisin (16).

8. Presse à balles rondes (1) selon l'une des revendications précédentes, **caractérisée en ce que**
le dispositif récupérateur (20) comprend un élément récupérateur (26), stationnaire, au voisinage de l'élément déflecteur (21, 23), le débattement de l'élément déflecteur (21, 23) élargissant au moins l'orifice de sortie (28) entre l'élément récupérateur (26) et l'élément déflecteur (21, 23).

9. Presse à balles rondes (1) selon l'une des revendications précédentes, **caractérisée en ce que**
l'élément récupérateur (26) comprend un segment de bride (27) dirigé radialement vers l'élément déflecteur (21, 23).

10. Presse à balles rondes (1) selon la revendication 9,
**caractérisée en ce que**
l'élément déflecteur (21, 23) se déplace avec un faible débattement, selon le segment de bride (27) et au voisinage de celui-ci, pour retenir des produits (40, 41) au moins principalement entre le segment de bride et l'élément déflecteur (21, 23) et pour un plus grand débattement, s'écarter plus du segment de bride (27) pour évacuer par l'orifice de sortie (28), des produits (40, 41) entre le segment de bride (27) et l'élément déflecteur (21, 23), hors de l'espace récupérateur.
